# EUROPEAN PATENT APPLICATION

(11) **EP 4 582 149 A1**
(43) Date of publication of application: **09.07.2025**
(21) Application number: 22957068.4
(22) Date of filing: 26.09.2022
(51) Int. Cl.: A62C 5/02, A62C 37/00

(54) **FIRE-FIGHTING FOAM FOAMING APPARATUS, SYSTEM AND METHOD**

(30) Priority: 31.08.2022 CN 202211055005
(71) Applicant: XCMG Fire-Fighting Safety Equipment Co., Ltd., Xuzhou, Jiangsu 221100 (CN)
(72) Inventor: XU, Xiaodong, Xuzhou, Jiangsu 221100 (CN); TIAN, Zhijian, Xuzhou, Jiangsu 221100 (CN); LIU, Wenfang, Xuzhou, Jiangsu 221100 (CN); ZHANG, Jun, Xuzhou, Jiangsu 221100 (CN); XU, Lei, Xuzhou, Jiangsu 221100 (CN); WU, Fushun, Xuzhou, Jiangsu 221100 (CN)
(74) Representative: Andrejewski - Honke Patent- und Rechtsanwälte Partnerschaft mbB
(86) International application number: PCT/CN2022/121318
(87) International publication number: WO 2024/045249

(57) **Abstract**

A fire-fighting foam foaming apparatus, system and method, relating to the technical field of compressed air foam fire suppression, and used for improving the foaming effect. The fire-fighting foam foaming apparatus comprises: an air nozzle assembly, comprising a liquid inlet hole, an air inlet hole, a first air outlet hole, and a flow guiding portion; the liquid inlet hole being in fluid communication with a first flow path, and the liquid inlet hole being located downstream of the first flow path; the air inlet hole being in fluid communication with a second flow path; and a foam mixing chamber, located downstream of the first flow path and the second flow path and in fluid communication with both the first flow path and the second flow path; both the first air outlet hole and the flow guiding portion extending into the foam mixing chamber. The foaming effect is improved.

## Description

### CROSS-REFERENCE TO RELATED APPLICATIONS

This disclosure is based on and claims priority to the application with Application No. 202211055005.5 filed on Aug. 31, 2022, the disclosure of which is hereby incorporated herein by reference in its entirety.

### BACKGROUND OF THE INVENTION

### Field of the Invention

This disclosure relates to the compressed air foam extinguishing technical field, in particular a firefighting foam foaming device, system and forming method.

### Description of Related Art

The compressed air foam system is a novel fire extinguishing system, which includes a firefighting pump, a compressed air system, a foam proportional mixing system, a spraying device, a pipeline system, etc. The compressed air foam system is used to generate compressed air foam for fire extinguishing. The compressed air foam system has two types: mobile systems and fixed systems. For example, a compressed air foam fire truck is equipped with a mobile on-board compressed air foam system, while a UHV converter station is equipped with a fixed compressed air foam system.

Compressed air foam is a group of bubbles with a small particle size, a fine and uniform foam structure, and a surface surrounded by a liquid film. Due to its low specific gravity and certain viscosity, it not only floats on the surface of common flammable liquids to form a foam covering layer, but also adheres to the surface of common flammable solids. Therefore, it is a fire extinguishing agent with high fire extinguishing efficiency and low water consumption, and is recommended for use in many fields and places such as the petroleum, chemical, warehousing, and substation. Research on firefighting technologies in recent years has also proven that compressed air foam significantly outperforms traditional ordinary firefighting foam generated at the foam muzzle or through a foam generator based on the negative pressure air-intake principle in terms of foam drainage time, stability, fire extinguishing and anti-reigniting efficiency.

The petroleum and chemical industry involve a large variety and quantity of flammable and explosive substances. Once a fire breaks out, it burns rapidly with a fierce spread, easily forming a large-scale three-dimensional fire, and is prone to reigniting, making firefighting extremely difficult. Currently, the flow rate of the foam mixture in a positive-pressure type foam system ranges from 20 to 100 L/s. However, for oil tanks or flammable liquid storage tanks with a capacity of 50,000 to 100,000 cubic meters in petrochemical enterprises, once a full-surface fire occurs, the supply intensity of the foam mixture of the positive-pressure type foam system required to extinguish one such storage tank should be at a flow rate of above 120 - 200 L/s to quickly cover the burning liquid surface. In order to achieve this supply intensity, the fixed system of the current storage tank farm is realized with a plurality of foam systems.

The inventors found that there are at least the following problems in the prior art: the uniform assembly of individual spraying devices on the storage tanks only increases the cost of composition of the fire extinguishing system, the foam is reliably transported and sprayed onto the fire-affected site. However, for compressed air foam fire trucks, the compressed air foam system cannot supply a large flow of compressed foam, making it difficult to achieve a longer injection range of the fire cannon and a larger firefighting operation scope. Therefore, it needs to develop a large-flow compressed air foam generating device to meet the requirements of high-efficiency and cost-effectiveness in extinguishing large-scale petrochemical fires.

### SUMMARY OF THE INVENTION

This disclosure provides a firefighting foam foaming device, system and forming method to improve the foaming effect of the firefighting foam.

Some embodiments of this disclosure provide a firefighting foam foaming device, comprising:
a two-phase flow injection seat, comprising a first flow path and a second flow path that are independent of each other;
a jet nozzle assembly comprising a liquid inlet hole, an air inlet hole, a first air outlet hole and a flow guiding section; the liquid inlet hole being in fluid communication with the first flow path and the liquid inlet hole being located downstream of the first flow path; the air inlet hole being in fluid communication with the second flow path and being located downstream of the second flow path; and
a foam mixing chamber, located downstream of the first flow path and the second flow path, and fluidly communicated with both the first flow path and the second flow path;
the first air outlet hole and the flow guiding section both extending into the foam mixing chamber; the first air outlet hole and the flow guiding section being so configured to cause the air flow from the jet nozzle assembly to flow to various positions in a radial direction of the foam mixing chamber.

In some embodiments, the flow guiding section comprises:
a second air outlet hole, located at a different position in the radial direction of the foam mixing chamber from the first air outlet hole.

In some embodiments, the jet nozzle assembly comprises:
a mounting plate, abutting against and secured to the two-phase flow injection seat; the mounting plate being provided with the liquid inlet hole in fluid communication with the first flow path of the two-phase flow injection seat and the air inlet hole in fluid communication with the second flow path;
an axial tube, located on the side of the mounting plate away from the two-phase flow injection seat; the axis of the axial tube being parallel to the central axis of the two-phase flow injection seat; and the axial tube being in fluid communication with the air inlet hole of the mounting plate; and
a radial tube, with its central axis intersecting the central axis of the axial tube, one end of the radial tube being in fluid communication with the axial tube, and the other end of the radial tube being located on the side of the axial tube facing the central axis of the two-phase flow injection seat.

In some embodiments, there is a plurality of the axial tubes that are arranged at intervals along a circumferential direction of the mounting plate.

In some embodiments, the other end of the axial tube is away from the two-phase flow injection seat; the other end of the axial tube is used as the first air outlet hole and is open; the other end of the axial tube faces the inner wall of the foam mixing chamber.

In some embodiments, the other end of the radial tube is away from the axial tube and is closed; the side wall of the radial tube near the other end of the axial tube is provided with the second air outlet hole; and
the axial direction of the second air outlet hole is parallel to the central axis of the two-phase flow injection seat or, the axial direction of the second air outlet hole is intersected by the central axis of the two-phase flow injection seat with an angle of less than 90°.

In some embodiments, the flow guiding section comprises:
a flow guiding plate, located near the first air outlet hole; the flow guiding plate being configured to deflect a portion of the air flow output through the first air outlet hole to a position near the central axis of the foam mixing chamber.

In some embodiments, the jet nozzle assembly further comprises:
a mounting plate, abutting against and secured to the two-phase flow injection seat; the mounting plate being provided with the air inlet hole in fluid communication with the second flow path of the two-phase flow injection seat; and
an axial tube, located on the side of the mounting plate away from the two-phase flow injection seat; the axis of the axial tube being parallel to the central axis of the two-phase flow injection seat; and the axial tube being in fluid communication with the air inlet hole of the mounting plate;
wherein the flow guiding plate is fixedly connected to the axial tube and is configured to be non-porous; the flow guiding plate is configured to form a negative pressure region at the side of itself away from the mounting plate, so that a portion of the air flow output by the axial tube flows to the negative pressure region.

In some embodiments, the first flow path is located on the central axis of the two-phase flow injection seat; and in the radial direction of the two-phase flow injection seat, the second flow path is located on the outer side of the first flow path.

In some embodiments, the firefighting foam foaming device further comprises: a first inlet tube, the first flow path disposed downstream of the first inlet tube and in fluid communication with the first inlet tube; and a first outlet tube, located downstream of the foam mixing chamber.

In some embodiments, the first inlet tube has the same flow area as the first outlet tube.

In some embodiments, the inlet diameter of the foam mixing chamber is 1.3 to 1.7 times the outlet diameter of the foam mixing chamber.

In some embodiments, the axial length of the foam mixing chamber is 0.4 to 0.6 times the outlet diameter of the foam mixing chamber.

In some embodiments, the inner wall of the foam mixing chamber is configured to be conical; the inlet of the foam mixing chamber has a larger flow area than the outlet of the foam mixing chamber.

In some embodiments, the inner wall of the foam mixing chamber and the central axis of the foam mixing chamber has an angle θ of between 40° and 50°.

Embodiments of this disclosure provide a firefighting foam foaming system, comprising:
a firefighting foam foaming device provided by any one of the technical solutions of this disclosure;
an air supply flow path, located upstream of a second flow path of the two-phase flow injection seat to supply air to the two-phase flow injection seat;
a foam stock supply flow path, located upstream of the first flow path to supply foam stock to the two-phase flow injection seat; and
a water supply flow path, also located upstream of the first flow path to supply water to the two-phase flow injection seat.

In some embodiments, the firefighting foam foaming system further comprises: a water spray branch, arranged in parallel with the firefighting foam foaming device; one end of the water spray branch being in fluid communication with the water supply flow path; the other end of the water spray branch being connected in parallel with the first outlet tube; and
a foam spray branch, communicated with the water supply flow path; the foam spray branch being located between the water supply flow path and the first flow path and being in fluid communication with both the water supply flow path and the first flow path;
wherein the water supply flow path is optionally in fluid communication with at least one of the water spray branch and the foam spray branch.

In some embodiments, the firefighting foam foaming system further comprises: a first switching valve, located to the water spray branch; and/or a second switching valve, located to the foam spray branch.

In some embodiments, the firefighting foam foaming system further comprises: a firefighting foam generator, located downstream of the firefighting foam foaming device and the water spray branch.

In some embodiments, the firefighting foam foaming system further comprises: a delivery tube, fluidly communicated to the firefighting foam generator, the delivery tube being located downstream of the firefighting foam generator.

In some embodiments, the firefighting foam foaming system further comprises: a rotation body, connecting the delivery tube.

In some embodiments, there is a plurality of the delivery tubes, two adjacent the delivery tubes are in fluid communication with each other and at least one of the delivery tubes is located on the rotation body.

In some embodiments, the firefighting foam foaming system further comprises: an injector, located downstream of the delivery tube; the distance between the injector and the firefighting foam generator being greater than 5 to 10 times the maximum diameter of the pipeline between the firefighting foam generator and the injector.

In some embodiments, the length of the pipeline between the firefighting foam foaming device and the firefighting foam generator is greater than or equal to 10 to 20 times the maximum diameter of the line.

In some embodiments, the firefighting foam foaming system further comprises: a foam mixture switching valve, located upstream of the first flow path and downstream of the foam spray branch and the foam stock supply flow path.

In some embodiments, the air supply flow path comprises:
an air compressor, configured to supply compressed air;
an air distribution valve, located downstream of the air compressor and upstream of the second flow path of the firefighting foam foaming device; and
a cooler, located downstream of the air distribution valve and upstream of the second flow path of the firefighting foam foaming device.

In some embodiments, the air supply flow path further comprises:
a first air filter, located upstream of the air compressor; and
a second air filter, located downstream of the air compressor.

In some embodiments, the foam stock supply flow path comprises:
a foam suction valve, configured to communicate with a foam stock port;
a flushing water inlet valve, configured to communicate with a flushing water port; the flushing water inlet valve being arranged in parallel with the foam suction valve; and
a foam pump, located downstream of the foam suction valve and the flushing water inlet valve.

In some embodiments, the water supply flow path comprises:
a filter;
a water pump, located downstream of the filter;
a vacuum pump, communicated with the pipeline between the filter and the water pump to extract air within that section of the line; and
a check valve, located downstream of the water pump.

Embodiments of this disclosure further provide a firefighting foam foaming method, implemented by using the firefighting foam foaming system provided by any one of the technical solutions of this disclosure, comprising the steps of:
delivering a foam mixture at a set first flow rate V_{M1} to a first inlet tube of the firefighting foam foaming device when spraying a foam extinguishing agent;
delivering a compressed air at a set second flow rate V_{G} to a second flow path of a two-phase flow injection seat of the firefighting foam foaming device.

In some embodiments, the V_{M1} is between 6 and 8 m/s and/or the V_{G} is between 8 and 15 m/s.

In some embodiments, the firefighting foam foaming method further comprises the step of:
delivering a fluid output by the firefighting foam foaming device at a set third flow rate V_{F1} to the firefighting foam generator.

In some embodiments, the V_{F1} is between 5 and 10 m/s.

In some embodiments, the firefighting foam foaming method further comprises the step of:
delivering a fluid output by the firefighting foam foaming device at a set fourth flow rate V_{F2} to the injector.

In some embodiments, the V_{F2} is between 6 and 12 m/s.

In some embodiments, the superficial velocity V_{1I} of the foam mixture injected at the inlet of the foam mixing chamber of the firefighting foam foaming device is between 2 m/s and 5 m/s; and/or
the superficial velocity V_{1G} of the compressed air injected at the inlet of the foam mixing chamber of the firefighting foam foaming device is between 10 m/s and 20 m/s; and/or
the superficial velocity V_{1O} of the foam outflow at the outlet of the foam mixing chamber of the firefighting foam foaming device is between 4 m/s and 8 m/s.

The firefighting foam foaming device provided by the above-mentioned technical solution comprises a two-phase flow injection seat, a jet nozzle assembly, and a foam mixing chamber. The two-phase flow injection seat enables water and foam stock to be injected into the foam mixing chamber along the first flow path to form a foam mixture column. The jet nozzle assembly enables the compressed air in the second flow path to fully interact with the foam mixture at different positions of the foam mixture column, so as to increase the contact area between the compressed air and the foam mixture column and improve the foaming effect.

### BRIEF DESCRIPTION OF THE DRAWINGS

Fig. 1 shows a schematic view of composition of the firefighting foam foaming system provided by embodiments of this disclosure.
Fig. 2 shows a schematic view of structure of the firefighting foam foaming device provided by embodiments of this disclosure.
Fig. 3 shows a schematic sectional view along the line A-A of Fig. 2.
Fig. 4 shows a schematic sectional view along the line B-B of Fig. 2.
Fig. 5 shows a schematic view of structure of a jet nozzle assembly of the firefighting foam foaming device provided by embodiments of this disclosure.
Fig. 6 shows a schematic view of composition of the firefighting foam foaming system provided by some other embodiments of this disclosure.
Fig. 7 shows a schematic view of structure of the firefighting foam foaming device provided by some other embodiments of this disclosure.
Fig. 8 shows a schematic sectional view along the line M-M of Fig. 7.
Fig. 9 shows a schematic sectional view along the line N-N of Fig. 7.
Fig. 10 shows a schematic sectional view of P of Fig. 7.
Fig. 11 shows a schematic view of structure of the firefighting foam generator of the firefighting foam foaming system provided by embodiments of this disclosure.
Fig. 12 shows a schematic sectional view along the line D-D of Fig. 11.
Fig. 13 shows a schematic view of the firefighting foam foaming method provided by embodiments of this disclosure.

### List of reference signs:

100. Firefighting foam foaming device; 200. Air supply flow path; 300. Foam stock supply flow path; 400. Water supply flow path; 500. Water spray branch; 600. Foam spray branch; 700. Firefighting foam generator; 810. Delivery tube; 820. Rotation body;
830. Injector; 840. Foam mixture switching valve; 850. Controller;
110. Two-phase flow injection seat; 120. Jet nozzle assembly; 130. Foam mixing chamber; 140. First inlet tube; 150. First outlet tube;
111. First flow path; 112. Second flow path;
121. Liquid inlet hole; 122. Air inlet hole; 123. First air outlet hole; 124. Flow guiding section; 124'. Second air outlet hole; 124". Flow guiding plate; 125. Mounting plate; 126. Axial tube; 127. Radial tube;
201. Air compressor; 202. Air distribution valve; 203. Cooler; 204. First air filter; 205. Second air filter; 206. Air flow meter; 207. One-way valve; 208. First pressure gauge; 209. Intake throttle valve;
300a. Foam stock suction branch; 300b. Flushing branch; 301. Foam suction valve; 302. Flushing water inlet valve; 303. Foam pump; 304. Check valve; 305. Foam flow meter;
306. Foam stoke port;
401. Filter; 402. Water pump; 403. Vacuum pump; 404. Check valve; 405. Vacuum meter; 406. Water flow meter; 407. Water inlet tube port;
501. First switching valve; 601. Second switching valve; 602. Second pressure gauge; 701. Main body; 702. Baffle.

### DESCRIPTION OF THE INVENTION

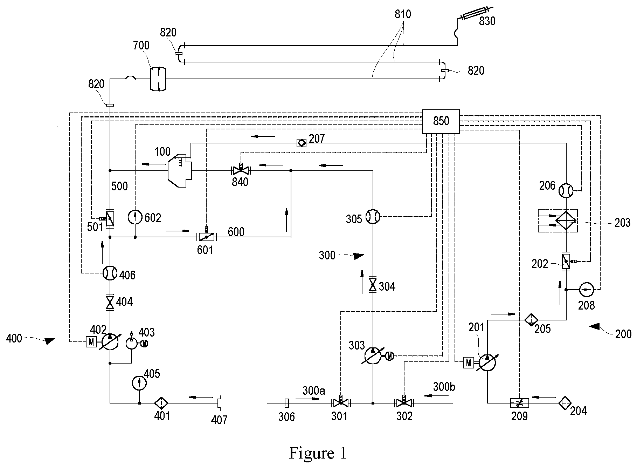

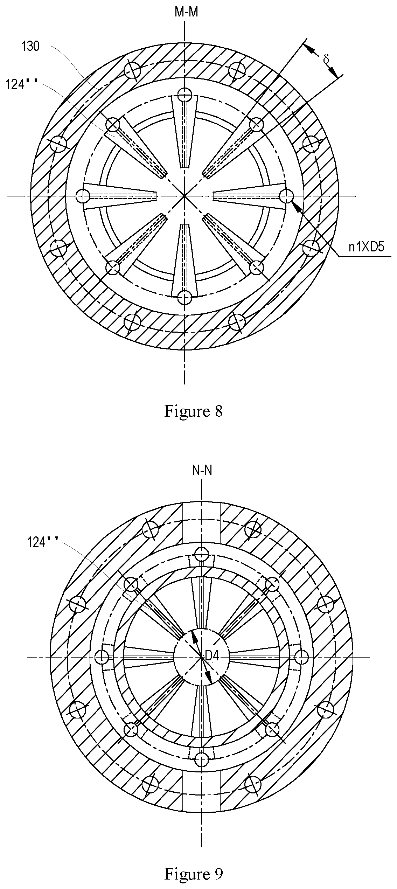

The technical solution according to this disclosure is explained in more detail below with reference to Fig. 1 to 13.

The inventors have found that in the firefighting industry, for the foam mixing devices of existing small- or medium-sized compressed air foam systems (with a foam mixture flow rate of 20 - 100 L/s), a single static mixer is connected to the pipeline or multiple static mixers are connected in series/parallel to form a set and connected to the pipeline. These devices feature a simple structure and reliable performance, and do not require additional driving force. These static mixers are divided into two categories in accordance with principle. One category starts from designing different fluid mixing and injection structures. For example: ①. dividing either the air phase flow or the liquid phase flow into several finer streams and injecting them into the outer interface of the other phase flow for mixing. ②. dividing either the air phase flow or the liquid phase flow into several finer streams and injecting them into the interior of the other phase flow for mixing, etc. The other category starts from designing different spoiler structures, such as superimposed mesh plates, spiral flow guiding plates, three-dimensional grid plates, conical spoilers, etc. These designs ultimately aim to better disperse the air phase flow by the liquid phase flow, and to mix the two phase flows more evenly under the impact of spoiler, becoming a bubble flow with fine particles and uniform foam distribution. In order to enhance the foaming effect of the afore the two types of static mixers, based on the above-mentioned designs, some other designs incorporate variable-diameter configurations like Venturi tubes or de Laval tubes in the upstream and downstream pipelines connecting the static mixers. This further enhances the impact and mixing effect of the two phase flows.

The mechanism of generating foam by a compressed air foam system is to evenly mix the foam stock with water in a certain proportion first, and then mix the foam mixture with the compressed air to foam, i.e. inject the compressed air in a certain proportion into the foam mixture, and generate foam after the two phase flows were impacted and mixed.

The stability, foaming property and fire extinguishing performance of the firefighting foam formed by the injection of compressed air are closely related to the physical properties of the foam stock, water and air, as well as the chemical composition of the foam stock. In the preparation process, the main factors affecting the above-mentioned properties are the proportion of the foam mixture, air-liquid ratio, mixing pressure, surface contact area of the air-liquid two phases and the mixing uniformity of the two phases.

The generation of compressed air foam is essentially a process of mixing and transporting air-liquid two-phase flow. Through research, the inventors have found that, depending on factors such as the injection air velocity, liquid velocity, pipe diameter, and fluid properties, this air-liquid two-phase flow forms five flow patterns: annular flow, slug flow, liquid-throttling flow, bubble flow and mist flow. Among them, when the main flow pattern is bubble flow, the formed foam has the best quality, with small average bubble size and a large number of bubbles, and the bubbles are evenly dispersed in the continuous liquid phase.

The existing stereotyping products and engineering practices show that the process control of foam mixture proportion, air-liquid ratio, mixing pressure and other processes in compressed air foam system has formed a mature and reliable technology in the industry, but there is no mature technology and process in the air-liquid two-phase surface contact area and two-phase mixing uniformity control. Especially for large-flow compressed air foam systems with a foam mixture flow rate greater than 150 L/s, due to the significant increase in the two-phase flow rate, in order to reduce pipeline pressure loss, the flowthrough diameters of the firefighting foam generators and related transportation pipelines are also correspondingly increased significantly. As a result, the foam mixing device structures originally suitable for compressed air foam systems with a flow rate of ≤ 100 L/s are difficult to provide sufficient contact area and means for the full mixing and foaming of the air-liquid two-phase flow. New problems arise during use, such as: ①. the original uniformly-mixed bubble flow cannot be achieved, and foam quality becomes poor; ②. overcurrent pressure loss of the foam mixing device is excessive; ③. the device occupies a large space, making it difficult to be placed on a vehicle; ④. complex structure and poor reliability, etc.

Upon further research, the inventors have found that, in the case where the chemical composition of the foam stock and the physical properties of the foam stock, water and air have been determined, there are mainly two factors that actually affect the firefighting foam preparation quality in a large-flow compressed air foam system: one is the mixing and foaming effect of the foam mixing chamber, and the other is the developmental changes in the pipeline transportation after foaming.

Therefore, the inventors proposed a firefighting foam foaming device for a large-flow compressed air foam system, which meets the successful application in vehicle-mounted or fixed system and achieves better fire extinguishing performance. The firefighting foam foaming device has achieved remarkable results in three aspects: firstly, it enables more uniform and delicate foam in mixing the large-flow two-phase flow; secondly, it reduces pipeline pressure loss, enabling the compressed air foam to achieve a longer spraying distance; thirdly, it features a simple and reliable structure with a small space occupation.

### Explanation of terminology

Firefighting foam refers to a group of bubbles for firefighting with a small volume and surface surrounded by a liquid film. Due to its specific gravity being much smaller than that of common combustible liquids, it floats on the surface of the liquid, forming a foam covering layer. At the same time, firefighting foam has a certain viscosity and adheres to the surface of common combustible solids.

The firefighting foam foaming method is as follows: Firstly, uniformly mixing the foam stock with water in a certain proportion, and then mixing the foam mixture with air for foaming, finally forming a fire extinguishing agent with fire extinguishing efficiency: firefighting foam.

The foam quality and fire extinguishing performance of the firefighting foam are mainly related to factors such as physical properties of the foam stock, water and air, proportion of the foam mixture, air-liquid ratio, mixing pressure, air-liquid mixing uniformity and surface contact area of the air phase and liquid phase.

Foam stock: a concentrated liquid that can be mixed with water at a suitable mixing ratio to form a foam solution.

Foam mixture: a foam solution prepared by mixing foam liquid with water at a specific mixing ratio.

Foaming ratio: the ratio of the foam volume to the volume of the foam mixture that forms the foam. Low-foaming-ratio foam: firefighting foam with a foaming ratio of less than 20. Wet foam: foam with a foaming ratio of less than 10. Dry foam: foam with a foaming ratio of not less than 10.

Compressed air foam fire truck: a fire truck mainly equipped with a water tank and a foam liquid tank, which sprays foam for fire extinguishing through a compressed air foam system.

Foam proportional mixing system: a system consisting of components such as a foam ratio mixer, a foam stock pump, a controller and a pipeline device, which can mix water and foam stock at a certain ratio.

Compressed air foam system: a device that mainly consists of a firefighting pump, a compressed air system, a foam proportional mixing system, a spraying device, a pipeline system, etc. and can produce compressed air foam.

Terminology as well as dimensional notations are described herein.

D1 is the diameter of the first flow path 111 and also the diameter of the first inlet tube 140.

D2 is the inlet diameter of the foam mixing chamber 130.

D3 is the diameter of the first outlet tube 150 and also the outlet diameter of the foam mixing chamber 130.

D4 is the diameter of the circumferential surface where the other end of all the radial tubes 127 is located.

d1 is the diameter of both ends of the main body 701.

d2 is the diameter of the middle part of the main body 701.

d3 is the diameter of the circumferential surface where the other end of all the baffles 702 is located.

L1 is the axial length of the foam mixing chamber 130.

L2 is the axial length of the main body 701.

L3 is the thickness of the baffle 702.

L4 is the thickness of the baffle 702.

L5 is the length of flow guiding plate 124''.

L6 is the width of the other end of the baffle 124''.

α is the cone angle of the baffle 702.

δ is the cone angle of the flow guiding plate 124''.

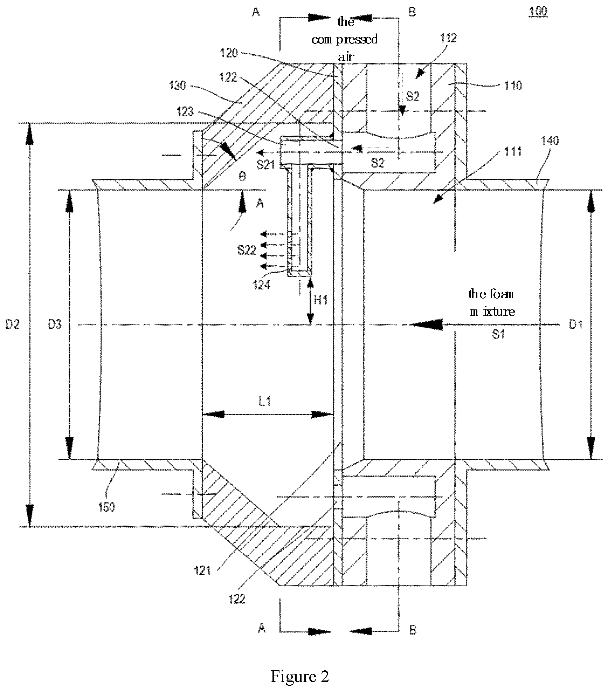

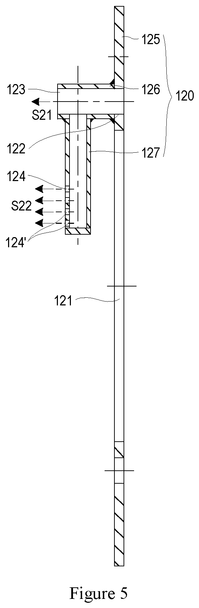

Referring to Figs. 1 to 2, embodiments of this disclosure provide a firefighting foam foaming device 100 for foaming foam from a foam mixture under the action of a compressed air. The firefighting foam foaming device 100 comprises a two-phase flow injection seat 110, a jet nozzle assembly 120 and a foam mixing chamber 130. A two-phase flow injection seat 110 comprises a first flow path 111 and a second flow path 112 that are independent of each other. Referring to Figs. 2 and 5, the jet nozzle assembly 120 includes a liquid inlet hole 121, an air inlet hole 122, a first air outlet hole 123 and a second air outlet hole 124'. The liquid inlet hole 121 is in fluid communication with the first flow path 111 and the liquid inlet hole 121 is located downstream of the first flow path 111. The air inlet hole 122 is in fluid communication with the second flow path 112 and located downstream of the second flow path 112. The foam mixing chamber 130 is located downstream of the first flow path 111 and the second flow path 112 and in fluid communication with both the first flow path 111 and the second flow path 112; the first air outlet hole 123 and the second air outlet hole 124' both extend into the foam mixing chamber 130; the first air outlet hole 123 and the second air outlet hole 124' are located in different positions in the radial direction of the foam mixing chamber 130.

The two-phase flow injection seat 110 is used for receiving the foam mixture and the compressed air. After entered the two-phase flow injection seat 110, the foam mixture directly flows along the first flow path 111 towards the foam mixing chamber 130. After entered the two-phase flow injection seat 110, the compressed air enters into the jet nozzle assembly 120 along the second flow path 112, then from the jet nozzle assembly 120 to the foam mixing chamber 130 to interact with the foam mixture entered into the foam mixing chamber 130 to generate the firefighting foam.

In order to facilitate connecting the firefighting foam foaming device 100 with other components, as shown in Fig. 2, in some embodiments, the firefighting foam foaming device 100 further comprises a first inlet tube 140 and a first outlet tube 150. The first flow path 111 is disposed downstream of the first inlet tube 140 and fluidly communicated with the first inlet tube 140. The first outlet tube 150 is located downstream of the foam mixing chamber 130.

The specific implementation of individual parts of the firefighting foam foaming device 100 is described in detail below according to the flow path of the fluid into the firefighting foam foaming device 100.

As described above, there are two types of fluid that enters into the firefighting foam foaming device 100: foam mixture and compressed air. Foam mixture is a mixture of foam stock and water. The foam mixture therein flows from the first inlet tube 140 into the first flow path 111 of the two-phase flow injection seat 110, wherein the fluid entered into the first flow path 111 flows along the line arrow S1, see Fig. 2. The compressed air flows from the external line of the firefighting foam foaming device 100 along the second flow path 112 into the two-phase flow injection seat 110, wherein the fluid entered into the second flow path 112 flows along the dashed line arrow S2, see Fig. 2.

In particular, as shown in Fig. 2, the foam mixture is delivered into the first inlet tube 140 and then enters into the first flow path 111 of the two-phase flow injection seat 110 along the first inlet tube 140. The central axis of the first inlet tube 140 coincides with the central axis of the two-phase flow injection seat 110. The foam mixture in the first flow path 111 of the two-phase flow injection seat 110 then flows into the liquid inlet hole 121 of the jet nozzle assembly 120, see Fig. 5. The liquid inlet hole 121 is located in the middle of the jet nozzle assembly 120, and the central axis of the liquid inlet hole 121 also coincides with the central axis of the two-phase flow injection seat 110. The flow area of the liquid inlet hole 121 is slightly larger than the flow area of the first inlet tube 140 and also slightly larger than the flow area of the first flow path 111 of the two-phase flow injection seat 110. It is to be noted that the first inlet tube 140 and the first flow path 111 in the cylindrical structure are taken herein as examples. The foam mixture subsequently flows out of the liquid inlet hole 121 of the jet nozzle assembly 120 and then into the foam mixing chamber 130, waiting to be mixed with the compressed air output from the second flow path 112 of the two-phase flow injection seat 110 for foaming to obtain foam.

Further referring to Fig. 2, the compressed air flows from the external line into the second flow path 112 of the two-phase flow injection seat 110 and then flows along the air inlet hole 122 of the jet nozzle assembly 120 into the jet nozzle assembly 120. Referring to Fig. 5, the compressed air entered into the jet nozzle assembly 120 is divided into two streams. One of the streams flows out of the jet nozzle assembly 120 from the first air outlet hole 123, namely the air stream S21; and the other stream flows out of the jet nozzle assembly 120 from the second air outlet hole 124', namely the air stream S22. The diameter of the first air outlet hole 123 has a diameter D5, and the second air outlet hole 124' has a diameter of D6.

Referring to Fig. 2, in some embodiments, the first flow path 111 is located on the central axis of the two-phase flow injection seat 110; in particular, the first flow path 111 is an air inlet hole 122 extending through the two-phase flow injection seat 110 in the direction of its own axis. The second flow path 112 includes two sections. The first section branch is an air hole extending in the radial direction of the two-phase flow injection seat 110, and the second section branch is an annular groove, the axis of which extends parallel to the axial direction of the two-phase flow injection seat 110, and which is in fluid communication with the air hole of the first section branch. The external compressed air enters the first section branch first and then flows to the second section branch. In the radial direction of the two-phase flow injection seat 110, the second flow path 112 is located on the outer side of the first flow path 111. Such a structure of the two-phase flow injection seat 110 not only enables the first flow path 111 and the second flow path 112 to be independent of each other, i.e. without crossflow or communication with each other, but also enables them to have a certain overlapping area in the axial direction of the two-phase flow injection seat 110. This effectively utilizes the space dimension of the two-phase flow injection seat 110, which occupies a small-volume structure and thus has a compact and reasonable structure.

The jet nozzle assembly 120 is fixedly connected to the two-phase flow injection seat 110. The air inlet hole 122 of the jet nozzle assembly 120 is located downstream of the second flow path 122 of the two-phase flow injection seat 110.

The compressed air entered into the jet nozzle assembly 120 is split and sprayed through the first air outlet hole 123 and the second air outlet hole 124'. Seen in the radial direction of the foam mixing chamber 130, the first air outlet hole 123 and the second air outlet hole 124' are located in different positions in the radial direction of the foam mixing chamber 130. The first air outlet hole 123 is closer to the radial edge of the foam mixing chamber 130 and the second air outlet hole 124' is closer to the central axis of the foam mixing chamber 130.

With the afore structure, the jet nozzle assembly 120 ingeniously enables the compressed air to be fully mixed with the foam mixture column from both the outer surface and the interior, expanding the contact area between the compressed air, foam, and water. Moreover, both the first air outlet hole 123 and the second air outlet hole 124' are located inside the foam mixing chamber 130, effectively reducing the overflow pressure loss caused by the space occupied by the jet nozzle assembly 120.

Referring to Figs. 2 and 5, in some embodiments, the jet nozzle assembly 120 comprises a mounting plate 125, an axial tube 126 and a radial tube 127. The mounting plate 125 is in particular a flat plate. Its thickness should be dimensioned to meet the requirements of the fixed assembling and as thin as possible to make the structure of the entire firefighting foam foaming device 100 more compact and delicate. The mounting plate 125 is abutted against and secured to the two-phase flow injection seat 110, in particular by such as screw fixation, welding or riveting, etc. The mounting plate 125 is provided with the air inlet hole 122 in fluid communication with the second flow path 112 of the two-phase flow injection seat 110 and a liquid inlet hole 121 in fluid communication with the first flow path 111. The axial tube 126 is located on the side of the mounting plate 125 away from the two-phase flow injection seat 110, and the axial tube 126 and the mounting plate 125 are fixed by welding. The axis of the radial tube 127 is vertical to the central axis of the two-phase flow injection seat 110. The axial tube 126 is in fluid communication with the air inlet hole 122 of the mounting plate 125. The compressed air enters into the axial tube 126 along the air inlet hole 122 of the mounting plate 125. The central axis of the radial tube 127 intersects the central axis of the axial tube 126, and one end of the radial tube 127 is in fluid communication with the axial tube 126, in particular, the radial tube 127 is located at the part of the axial tube 126 near the downstream end. This structure allows the radial tube 127 to be at a certain axial distance from the inlet of the foam mixing chamber 130, so that the foam mixture interacts with the compressed air output from the radial tube 127 in a relatively stable state. The other end of the radial tube 127 away from the axial tube 126 is located on the side of the axial tube 126 facing the central axis of the two-phase flow injection seat 110.

In the above-mentioned technical solution, the compressed air output from the axial tube 126 interacts with the part of the liquid column formed by the foam mixture in the circumferential surface area, and the compressed air output from the radial tube 127 can extend in the central position of the foam mixture to interact with the part of the liquid column formed by the foam mixture in the central area, thereby greatly increasing the contact area of the compressed air with the foam mixture and enhancing the foaming effect. Moreover, the arrangement of the axial tube 126 and the radial tube 127 reduces the resistance of the liquid flow shock.

Further referring to Fig. 2, in some embodiments, the other end of the radial tube 127 is away from the axial tube 126 and is closed; the side wall of the radial tube 127 near the other end of the axial tube 126 is provided with the second air outlet hole 124'; and the axial direction of the second air outlet hole 124' is parallel to the central axis of the two-phase flow injection seat 110 or, the axial direction of the second air outlet hole 124' is intersected by the central axis of the two-phase flow injection seat 110 with an angle of less than 90°.

Further referring to Fig. 2, in some embodiments, the other end of the axial tube 126 is away from the two-phase flow injection seat 110 and is open, and this opening is used as first air outlet hole 123. The other end of the axial tube 126 faces the inner wall of the foam mixing chamber 130, i.e. the conical inner wall of the foam mixing chamber 130.

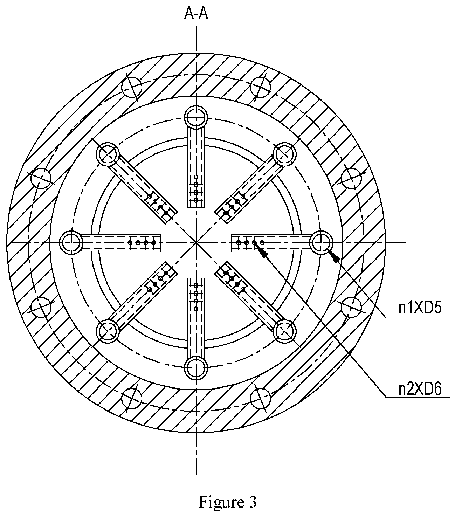

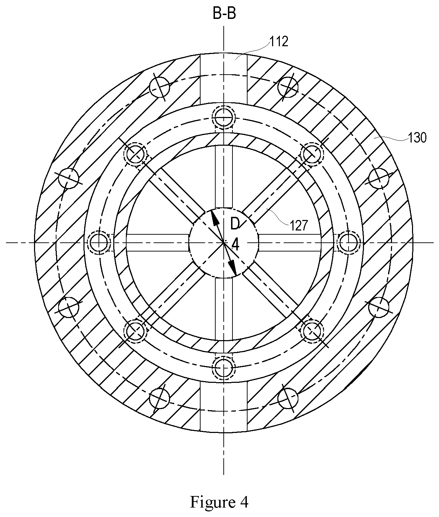

Referring to Figs. 3 and 4, in some embodiments, there is a plurality of axial tubes 126, such as 8 to 10. The plurality of axial tubes 126 are distributed in the circumferential direction of the mounting plate 125, in particular, they can be uniformly arranged. This arrangement enables the compressed air output from the axial tube 126 to interact with the liquid column formed by the foam mixture in multiple positions in the circumferential surface area, so as to enhance the foaming effect.

Further referring to Figs. 3 and 4, in some embodiments, there is a plurality of radial tubes 127, in particular such as 8 to 10. The axial tubes 126 and the radial tubes 127 are arranged in a one-to-one correspondence.

Referring to Figs. 2, 3 or 5, in some embodiments, each axial tube 126 is provided with a first air outlet hole 123. Each radial tube 127 is provided with a plurality of second outlet holes 124'. The first air outlet hole 123 has a large flow-through area and the individual second air outlet holes 124' are microporous. In some embodiments, the flow-through area of the other end of the axial tube 126 is 1.5 to 2 times that of all the second air outlet holes 124' of the radial tubes 127 that are in fluid communication with the axial tube 126. The axial distance H1 (see Fig. 2) from the core column top of the radial tube 127 inserted into the middle part of the foam mixing chamber 130 to the foam mixing chamber 130 is 0.15 - 0.2 times the flowthrough diameter D1 (see Fig. 2) of the foam mixture inflow of the two-phase flow injection seat 110, so that the air flow output from the radial tube 127 fully interacts with the interior of the foam mixture.

Further referring to Figs. 3 and 4, in some embodiments, the other end of all the radial tubes 127 is located on a common circumferential surface, and the diameter D4 of this circumferential surface is 0.3 to 0.4 times the diameter D1 of the first flow path 111.

In some embodiments, the diameter of the first flow path 111 is equal to that of the first inlet tube 140, both being D1. The diameter of the first outlet tube 150 is D3. In some embodiments, the first inlet tube 140 has the same flow area as the first outlet tube 150. That is, D1 equals to D3.

In the above technical solution, the axial tube 126 and the radial tubes 127 are used to output the compressed air, so that the compressed air is sufficiently mixed from the outer surface and the interior of the foam mixture column, which enlarges the contact area of the two-phase flow, reduces the overflow pressure loss, decreases the resistance of the compressed air injection, and optimizes the path of crash and agitation of gas phase and liquid phase, thereby achieving the foaming effect with a more uniform mixing and smaller foam particle size.

Moreover, in the above technical solution, the jet nozzle assembly 120 is located inside the cylindrical hole of the foam mixing chamber 130, and the jet nozzle assembly 120 adopts a reasonable T-shaped axial hole design to ensure that the minimum flow area of the foam mixing chamber 130 is not less than inflow area of the foam mixture of the two-phase flow injection seat 110. The firefighting foam foaming device 100 achieves a full mixing of the compressed air with the foam mixture column from both the outer surface and the interior, expands the contact area between the two-phase flow, and effectively reduces the overflow pressure loss caused by the space occupiation of the jet nozzle. Through design of the reasonable number of jet nozzles and the structural size for the jet nozzle assembly 120, the minimum flow area of the foam mixing chamber 130 is made not less than the inflow area of the foam mixture of the two-phase flow injection seat 110.

Further referring to Fig. 2, the inner wall of the foam mixing chamber 130 is configured to be conical; the inlet of the foam mixing chamber 130 has a larger flow area than the outlet of the foam mixing chamber 130, i.e. D2 is larger than D3.

The foam mixing chamber 130 adopts a conical-cylindrical and variable cross-sectional design. On one hand, this forms a relatively low pressure region near the conical surface when the foam mixture flows through the foam mixing chamber 130, facilitating the injection and mixing of the first air outlet hole 123 and the second air outlet hole 124'. On the other hand, most of the compressed air collides with the conical surface and the liquid phase near the conical surface through the first air outlet hole 123 that is parallel to the delivery tube axis, and after reflected from the conical surface, stirs and collides the liquid phase, thereby achieving the foaming effect of more uniform mixing and smaller foam particle size.

In some embodiments, the foam mixing chamber 130 has an axial length L1 and the foam mixing chamber 130 has an outlet diameter D3, wherein L1 is 0.35 to 0.5 times of D3.

In some embodiments, the inner wall of the foam mixing chamber 130 and the central axis of the foam mixing chamber 130 has an angle θ of between 40° and 50°.

As described above, the interior of the foam mixing chamber 130 is configured as conical-cylindrical hole with the variable cross-section. The flowthrough diameter D3 of the foam outflow conical mouth is the same as the inflow flowthrough diameter D1 of the foam mixture of the two-phase flow injection seat 110, and the flowthrough diameter D2 of the cylindrical mouth of the foam mixing chamber 130 is 1.5 times the flowthrough diameter D3 of the conical mouth. That is, the inlet diameter D2 of the foam mixing chamber is 1.3 to 1.7 times the outlet diameter D3 of the foam mixing chamber 130, in particular such as 1.5 times. Using the afore proportional parameters, the foaming effect is effectively improved.

In some embodiments, the axial length L1 of the foam mixing chamber 130 is 0.4 to 0.6 times the outlet diameter D3 of the foam mixing chamber 130, in particular such as 0.4 times, 0.5 times or 0.6 times. Using the afore proportional parameters, the foaming time is in a favorable range, thereby greatly improving the foaming effect.

Using the above parameters, the pipeline pressure loss is reduced, the foaming quality is improved, and a more uniform foam flow with a better fire extinguishing performance is formed.

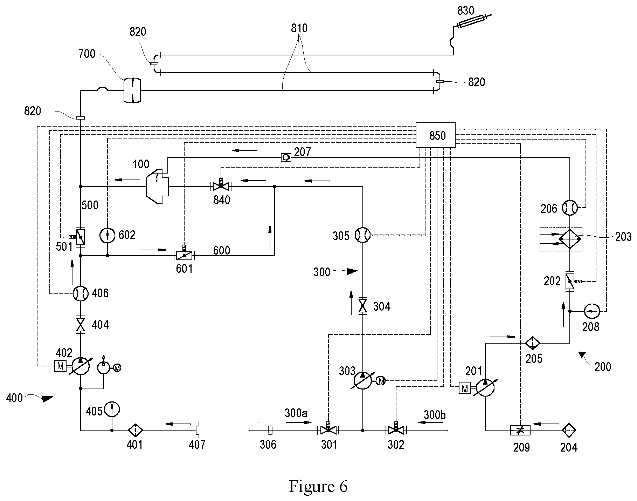

Some other embodiments are described below with reference to Figs. 6 to 10.

The difference between this embodiment and the afore embodiments is the different implementations of the flow guiding section 124. In particular, the flow guiding section 124 comprises a flow guiding plate 124'' located near the first air outlet hole 123. The flow guiding plate 124'' is configured to deflect a portion of the air flow output through the first air outlet hole 123 to a position near the central axis of the foam mixing chamber 130.

In various embodiments described above, the flow guiding section 124 is in the form of a second air outlet hole 124'. Since the second air outlet hole 124' is located at a different position in the radial direction of the foam mixing chamber 130 from the first air outlet hole 123, the air flow from the second air outlet hole 124' is closer to the central axis of the foam mixture column, and the air flow from the first air outlet hole 123 is closer to the circumferential surface area of the foam mixture column.

However, in this embodiment, all the air flow is output via the first air outlet hole 123 to the foam mixing chamber 130. The surface of the flow guiding plate 124'' blocks the foam mixture entering the foam mixing chamber 130, and thus is located downstream in the flow direction of the foam mixture, i.e. on the side of the flow guiding plate 124'' facing away from the mounting plate 125, forming a negative pressure region A, which makes there less foam mixture. The compressed air output via the first air outlet hole 123 can smoothly enter the region and is mixed with the foam mixture therein. The positions of the negative pressure region A and the first air outlet hole 123 are also different positions in the radial direction of the foam mixing chamber 130. Thus, both in the central axis area and in the circumferential surface area of the foam mixture column entered the foam mixing chamber 130, there is compressed air interacting with the foam mixture column.

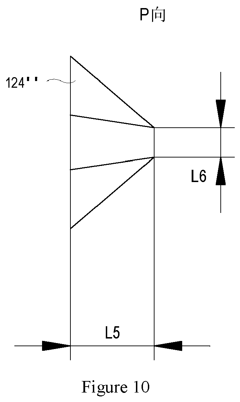

Referring to Fig. 10, seen from P, the flow guiding plate 124'' is trapezoidal, i.e. it is relatively thick at one end connected to the axial tube 126 and is relatively thin at the other end. L5 is in the range of 15 to 30 mm and L6 is in the range of 5 to 8 mm. the flow guiding plate 124" has a conical angle δ of 5° to 25°, in particular such as 15°, 18°, 20°, 22°, or 25°, etc.

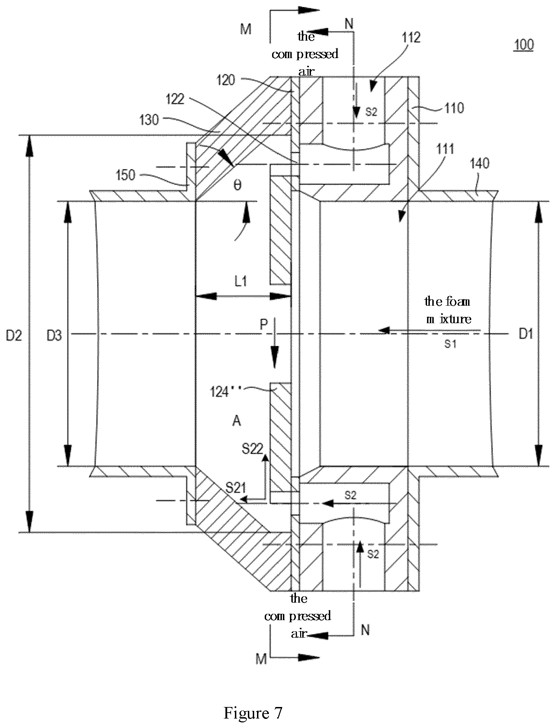

Referring to Fig. 7, the inlet diameter D2 of the foam mixing chamber 130 is larger than the outlet diameter D3 of the foam mixing chamber 130. The fluid flow in the first flow path 111 is utilized to form a low pressure region at the annular wall space of the conical chamber to facilitate the compressed air to enter; and the low pressure region A is also formed on the side of the flow guiding plate 124'' away from the mounting plate 125.

The afore technical solution ingeniously utilizes the low pressure region A formed on the backside of the jet nozzle assembly 120 after it is flowed through by the liquid stream to guide the compressed air, and after reflected from the inner conical surface of the foam mixing chamber 130, the compressed air enters into the middle part of the foam mixing chamber 130 along the backside of the jet nozzle assembly 120, so as to achieve a full mixing of the compressed air with the foam mixture column from both the outer surface and the interior, expands the contact area of the two-phase flow, and effectively reduces the overflow pressure loss caused by the space occupied by the jet nozzle assembly 120.

Referring to Fig. 1, some other embodiments of this disclosure further provide a firefighting foam foaming system, comprising an air supply flow path 200, a foam stock supply flow path 300, a water supply flow path 400 and a firefighting foam foaming device 100 provided by any one of the technical solutions of this disclosure. The air supply flow path 200 is located upstream of a second flow path 112 of the two-phase flow injection seat 110 to supply air to the two-phase flow injection seat 110. The foam stock supply flow path 300 is located upstream of the first inlet tube 140 to supply foam stock to the first inlet tube 140. The water supply flow path 400 is also located upstream of the first inlet tube 140 to supply water to the first inlet tube 140.

The structure, principle and specific implementation of the firefighting foam foaming system are described in detail below according to the flow direction of individual fluids.

A compressed air supply section is described firstly. The air supply flow path 200 is used for supplying compressed air to the second flow path 112 of the two-phase flow injection seat 110 of the firefighting foam foaming device 100 as described above.

Referring to Fig. 1, in some embodiments, the air supply flow path 200 comprises an air compressor 201, an air distribution valve 202 and a cooler 203. These parts are in fluid communication with each other via pipelines. The air compressor 201 is configured to supply compressed air. Upstream of the air compressor 201, an intake throttle valve 209 can also be provided to adjust the intake air amount. Upstream of the intake throttle valve 209, a first air filter 204 can also be provided to filter impurities from air. A second air filter 205 is arranged downstream of the air compressor 201 to filter impurities in the compressed air output from the air compressor 201.

In order to accurately detect the air pressure of the compressed gas in the air supply flow path 200, a first pressure gauge 208 is provided on the pipeline between the air distribution valve 202 and the second air filter 205 for detecting the pressure within the pipeline.

An air distribution valve 202 is arranged downstream of the second air filter 205, in particular in the pipeline downstream of the second air filter 205. The air distribution valve 202 is used to distribute the compressed air output from the air compressor 201 to supply the compressed air to the firefighting foam foaming device 100 at a set flow parameter. A cooler 203 is provided downstream of the air distribution valve 202. The cooler 203 is used to adjust the temperature of the compressed air output from the air distribution valve 202, so that the compressed air enters into the second flow path 112 of the firefighting foam foaming device 100 at a set temperature demand.

In order to precisely control the flow rate of the compressed air output from the air supply flow path 200 to the second flow path 112, the air supply flow path 200 further includes an air flow meter 206. The air flow meter 206 is located downstream of the cooler 203. The flow of the compressed air in the pipeline is measured by the air flow meter 206.

Further referring to Fig. 1, in some embodiments, the air supply flow path 200 further comprises a one-way valve 207, which is located between the air flow meter 206 and the second flow path 112, so that the compressed air can only flow from the air flow meter 206 to the second flow path 112, but cannot flow back. Moreover, the possibility of the phenomenon of backflow of liquid from the first flow path to the air path in the firefighting foam foaming device 100 in some cases is eliminated.

In some embodiments, the firefighting foam foaming system further comprises a controller 850, which is in communication with the air compressor 201, the intake throttle valve 209, the first pressure gauge 208, the air distribution valve 202 and the air flow meter 206. According to the state parameters detected by the water flow meter 406, a second pressure gauge 602, a second switching valve 601, a foam mixture switching valve 840, the first pressure gauge 208 and the air flow meter 206, the cooler 850 controls the working state of the air compressor 201, the intake throttle valve 209 and the air distribution valve 202 depending on fire extinguishing requirements, so that the parameters of the compressed air entered into the second flow path 112 of the two-phase flow injection seat 110 of the firefighting foam foaming device 100 meet the requirements. The parameters are e.g. flow, superficial velocity, also known as flow rate, etc.

Further referring to Fig. 1, the foam stock supply flow path 300 is described below. The foam stock supply flow path 300 is used for supplying foam stock to the first flow path 111 of the two-phase flow injection seat 110 of the firefighting foam foaming device 100 as described above.

In some embodiments, the foam stock supply flow path 300 comprises a foam suction valve 301, a flushing water inlet valve 302 and a foam pump 303. These parts are in fluid communication with each other via pipelines.

As can be seen from Fig. 1, the foam pump 303 is used to pump foam. Upstream of the foam pump 303, two branches are provided: a foam stock suction branch 300a and a flushing branch 300b. The foam stock suction branch 300a is used to supply foam stock to the foam pump 303, and the flushing branch 300b provides flushing water to the foam pump 303 when individual components of the foam stock supply flow path 300 need to be flushed.

Referring to Fig. 1, the foam suction valve 301 is located in the foam stock suction branch 300a and is configured to communicate with a foam stock port 306.

The flushing water inlet valve 302 is located in the flushing branch 300b and is configured to communicate with a flushing water port. The flushing water inlet valve 302 is arranged in parallel with the foam suction valve 301.

The foam pump 303 is located downstream of the foam suction valve 301 and the flushing water inlet valve 302. According to demand, either the foam suction valve 301 or the flushing water inlet valve 302 is in the open state, and the fluid can flow through the valve in the open state.

In order to precisely detect the pressure of the foam stock pumped by the foam pump 303, in some embodiments, the foam stock supply flow path 300 comprises a check valve 304. The check valve 304 is used to make foam in the pipeline of the foam pump 303 flow in one direction and prevent the backflow.

In order to precisely detect the flow of the foam stock pumped by the foam pump 303, in some embodiments, the foam stock supply flow path 300 comprises a foam flow meter 305. The foam flow meter 305 is used to detect the foam flow in the pipeline.

In some embodiments, the foam suction valve 301, the flushing water inlet valve 302, the foam pump 304, the foam flow meter 305 and the foam mixture switching valve 840 are all in communication with the controller 850. The cooler 850 is configured to control the respective working state of the foam suction valve 301, the flushing water inlet valve 302 and the foam pump 303 according to the state parameters detected by the water flow meter 406, the second pressure gauge 602, the second switching valve 601, the foam mixture switching valve 840, the foam flow meter 305 and the check valve 304 as well as the concrete fire extinguishing requirements.

Further referring to Fig. 1, the water supply flow path 400 is described below. According to the specific fire extinguishing requirements, the firefighting foam foaming system can not only output water separately, but also output dry foam or wet foam.

Referring to Fig. 1, in some embodiments, the firefighting foam foaming system further comprises a water supply flow path 400. The water supply flow path 400 includes a filter 400, a water pump 402, a vacuum pump 403 and a check valve 404. The parts which need fluid communication are fluidly communicated via pipelines. The water pump 402 is located downstream of the filter 401. The vacuum pump 403 is communicated with the pipeline between the filter 401 and the water pump 402 to extract air within that section of the line. The check valve 404 is located downstream of the water pump 402.

The water supplied by the water supply flow path 400 is used to generate foam mixture and firefighting foam, but also is used directly to extinguish fires. In order to realize the switch between the afore functions, as shown Fig. 1, in some embodiments, the firefighting foam foaming system further comprises a water spray branch 500 and a foam spray branch 600.

If water needs to be used as fire extinguishing agent, the water spray branch 500 is in the conducting state and the foam spray branch 600 is disconnected. In this case, the water supplied by the water supply flow path 400 does not flow towards the first flow path 111 of the two-phase flow injection seat 110 of the firefighting foam foaming device 100, but directly to the water spray branch 500 and then is output as fire extinguishing agent.

If foam needs to be used as fire extinguishing agent, the water spray branch 500 is disconnected and the foam spray branch 600 is in the conducting state. In this case, the water supplied by the water supply flow path 400 flows, after being mixed with the foam stock delivered by the foam stock supply flow path 300 along the foam spray branch 600, in the first flow path 111 of the two-phase flow injection seat 110 and co-acts with the compressed air delivered by the air supply flow path 200 to attain the firefighting foam.

In particular, the water spray branch 500 is arranged in parallel with the foam spray branch 600; one end of the water spray branch 500 is in fluid communication with the water supply flow path 400; the other end of the water spray branch 500 is connected in parallel with the first outlet tube 150. The foam spray branch 600 is in communication with the water supply flow path 400; the foam spray branch 600 is located between the water supply flow path 400 and the first flow path 111. The foam spray branch 600 is in fluid communication with both the water supply flow path 400 and the first flow path 111. The water supply flow path 400 is optionally in fluid communication with at least one of the water spray branch 500 and the foam spray branch 600.

Referring to Fig. 1, in some embodiments, the firefighting foam foaming system further comprises a first switching valve 501 and/or a second switching valve 601. The first switching valve 501 is located to the water spray branch 500 and the second switching valve 601 is located to the foam spray branch 600. When the first switching valve 501 is in an open state, the water spray branch 500 allows water to pass through. When the first switching valve 501 is in the closed state, the water spray branch 500 does not allow water to pass through. When the second switching valve 601 is in an open state, the foam spray branch 600 allows water to pass through. When the second switching valve 601 is in the closed state, the foam spray branch 600 does not allow water to pass through.

Water provided by the outside or a fire truck enters the water supply flow path 400 through the water inlet tube port 407, flows through the filter 401, and is pumped by the pump 402 to flow downstream. A vacuum pump 403 and a vacuum meter 405 are located on the pipeline between the water pump 402 and the filter 401 so as to evacuate the pipeline when necessary. After flowing through the water pump 402, water flows through the check valve 404 and the water flow meter 406, and then is selectively diverted to the water spray branch 500 or the foam spray branch 600. When water is supplied by pressure, the vacuum pump 403 needs not to work. When water is pumped from a low-lying water source, the vacuum pump 403 is used to evacuate between the water pump 402 and the water inlet tube to form a vacuum to achieve suction.

The first option: when water flows towards the foam spray branch 600, the second switching valve 601 is in the open state and the first switching valve 501 is in the closed state, all the water delivered by the water pump 402 enters via the foam spray switching valve into the first flow path 111 of the two-phase flow injection seat 110 of the firefighting foam foaming device 100 and is preliminarily mixed with the foam stock delivered to the first flow path 111 of the two-phase flow injection seat 110 by the foam stock supply flow path 300 to form a foam mixture. In order to more conveniently control whether foaming is required, a foam mixture switching valve 840 is provided at the inlet of the first flow path 111 of the two-phase flow injection seat 110, and both the foam stock supply flow path 300 and the water supply flow path 400 are located upstream of the foam mixture switching valve 840. The foam stock delivered by the foam stock supply flow path 300 and the water delivered by the water supply flow path 400 merge at the foam mixture switching valve 840. The foam mixture switching valve 840 is also in communication with the controller 850 described above, which controls the parameters of the foam mixture switching valve 840, such as the open and closed state and the opening degree.

In some embodiments, a second pressure gauge 602 is located on the pipeline between the upstream of the second switching valve 601 and the downstream of the water flow meter 406. The second pressure gauge 602 detects the water pressure in the pipeline to mix water with the foam stock at a set pressure. The second pressure gauge 602 is in communication with the controller 850 described above. The parameters detected by the second pressure gauge 602 is transmitted to the controller 850, which controls the working state of the water pump 402, the vacuum pump 403, the foam spray switching valve according to the parameters detected by the second pressure gauge 602.

The second option: water pumped by the water pump 402 does not flow through the firefighting foam foaming device 100, but directly to downstream of the firefighting foam foaming device 100. At this time, the second switching valve 601 is closed, so that water cannot flow through it. The first switching valve 501 is open, so that water flows through the first switching valve 501 into the water spray branch 500 and finally to the foam spray injector 830 described later to spray foam for fire extinguishing. The drive power of the water pump 402, the vacuum pump 403, the foam pump 303 and the air compressor 201 comes from the power device on the chassis of the fire truck. Water and foam stock come from the water tank and foam tank loaded on the chassis. Based on the input signals collected by various sensors and the operator's commands, the controller 850, according to the needs of the fire-fighting site, calls corresponding control programs in line with different operation requirements of water spraying, wet-foam spraying, and dry-foam spraying, and accurately formulates the mixture composition of water, foam stock and compressed air to achieve water or foam jet with a certain pressure and flow rate for fire extinguishing.

For large-flow compressed air foam systems, due to the high flow in the firefighting pipeline, there may still be some large air masses that have not fully foamed after the compressed air is processed by the firefighting foam foaming device 100. In addition, because there are many direction changes and diameter changes in pipeline transportation, the formed composite fluid composed of the foam (large amount), foam mixture (small amount), and compressed air (small amount) may also cause air to overflow from the bubble flow and integrate into large bubbles as it passes through the pipeline. In order to improve the fire extinguishing effect, the bubble flow delivered through the firefighting foam foaming device 100 will be delivered to the firefighting foam generator 700 to be finely divided and mixed for foaming again. Referring to Fig. 1, the firefighting foam generator 700 is located downstream of the firefighting foam foaming device 100 and the water spray branch 500. The firefighting foam generator 700 serves the function of secondary foaming. This helps to enhance the performance of the generated foam, makes it better meet the fire extinguishing requirements and thus achieves a better fire-extinguishing effect.

There are a plurality of implementations of the firefighting foam generator 700. Two specific implementations are described below.

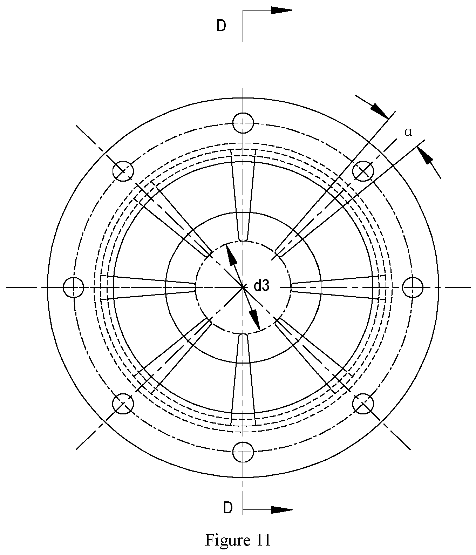

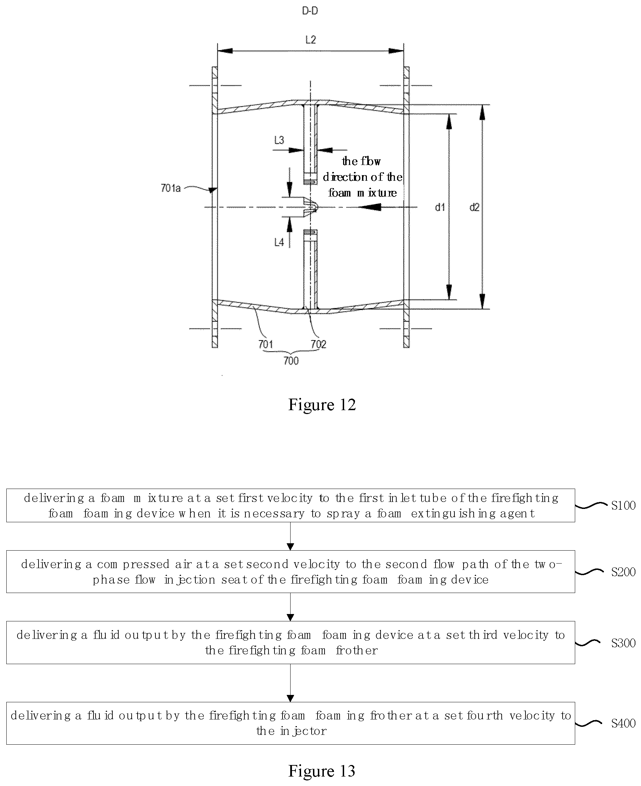

As shown in Figs. 11 and 12, the first implementation is that the firefighting foam generator 700 includes a main body 701 and a baffle 702 located therein. In particular, the main body 701 is configured as rotation body, in particular drum-shaped. The baffle 702 extends in the radial direction of the through hole 701a, and the maximum extension surface of the baffle 702 is parallel to the cross-section of the main body 701.

In the axial direction of the firefighting foam generator 700, the main body 701 has a through hole 701a that extends through its own axial direction. The openings on both ends of the through hole 701a of the main body 701 have less flow area than the middle part of the main body 701.

The baffle 702 is configured to be conical and has a cone angle α. In particular, α is 9° to 19°, in particular such as 9°, 12°, 15°, 17°, 18° or 19°. The angle of α varies depending on the distributed number of baffles 702. The baffle 702 is arranged in the radial direction of the main body 701. One end of the baffle 702 is fixedly connected to the main body 701, in particular by welding or in other fixing way. The other end of the baffle 702 extends into the main body 701 near the central axis. One end of the baffle 702 has a larger size than the other end thereof, as shown in Fig. 11, so that the connection area of the baffle 702 with the main body 701 is large and the connection is more stable.

In some embodiments, there are 8 to 10 baffles 702. The individual baffles 702 are distributed uniformly in the circumferential direction of the main body 701. The maximum extension surface of the baffle 702 is parallel to the cross-section of the main body 701, as shown in Fig. 11.

Referring to Fig. 12, the through hole 701a of the main body 701 has a diameter d1 at the inlet, and the main body 701 corresponding to the position where the baffle 702 is located has a diameter d2. The other end of the plurality of baffles 702 is located in a common circumference with a diameter d3, wherein d2 = (1.1 - 1.25)*d1 and d3 = (0.3 - 0.4)*d1. The thickness L3 of the baffle 702 is: L3 = 15 mm - 30 mm, and the width L4 of the baffle 702 is: L4 = 15 mm - 30mm. With this parameter range, the pressure loss of the pipeline is reduced, and the large foam formed during the transportation of foam delivered from the firefighting foam foaming device 100 is effectively broken. This improves the foaming quality of the firefighting foam foaming system, enabling the production of more uniform foam with better fire extinguishing performance.

The firefighting foam generator 700 has an axial length L2, wherein L2≥d1. The flowthrough area (also known as the flow area) after passing through the baffle 702 of the firefighting foam generator 700 is 0.85 to 1 times that at the inlet of the firefighting foam generator 700. Eventually, the superficial velocity V₂₁ of the fluid before entering the firefighting foam generator 700 is 0.6 to 0.8 times the superficial velocity V₂ of the fluid at the inlet of the firefighting foam generator 700, and the superficial velocity V_{2O} of the fluid after passing through the conical baffle 702 of the mixing chamber is 1.1 to 1.3 times the superficial velocity V₂ of the fluid at the inlet of the firefighting foam generator 700.

By adopting the above-mentioned implementation of the firefighting foam generator 700, it reduces the pressure loss of the mixed flowthrough and enables the foam to be further promoted to foam during the transportation process. Moreover, the firefighting foam generator 700 has a compact structure and occupies a small space. Each baffle 702 is designed in a conical shape in the radial direction of the main body 701. On the one hand, it reduces the impact pressure loss when the foam flows through. On the other hand, it can better break up the large bubbles that exist at the annular wall and overflow due to liquid throttling, slug flow, etc., and it can form numerous turbulent vortices distributed from the annular wall to the center of the pipeline at the rear side of the baffle 702, that is, in the downstream, promoting the gas-liquid two-phase flow to be uniformly dispersed again and finally forming finer and more uniform high-quality foam, thereby improving the fire extinguishing effect.

The afore technical solution is applicable to scenarios that require large-flow compressed air foam. The firefighting foam foaming system consists of a firefighting foam foaming device 100 and a firefighting foam generator 700 connected in series. The firefighting foam foaming device 100 is used to mix and foam the compressed gas and foam mixture injected in the gas-liquid two-phase flow, that is, to achieve the first-stage foaming. The firefighting foam generator 700 then realizes the second-stage foaming. The firefighting foam generator 700 re-divides, mixes, and foams the large air masses that still exist after being processed by the firefighting foam foaming device 100 and are not fully dispersed into the foam mixture, as well as the large bubbles formed by the integration of gas overflowing from the bubble flow due to changes in direction or diameter after a certain transportation distance, thus achieving secondary foaming. Tests on the foam mixture with a flow of 100 - 200 L/s have verified that within a foaming ratio range of 3 - 15, all the above-mentioned technical solutions demonstrate satisfactory foaming results.

Returning to Fig. 1, in some embodiments, the firefighting foam foaming system further comprises a delivery tube 810 that is in fluid communication with the firefighting foam generator 700 and located downstream of the firefighting foam generator 700.

The foam generated by the two-stage foaming is conveyed out through the delivery tube 810. The delivery tube 810 may be located to the rotation body 820 in sections to meet the requirements of folding during the driving state and unfolding for spraying during the operation state of the vehicle-located pipeline system.

In some embodiments, there is a plurality of delivery tubes 810, and two adjacent delivery tubes 810 are in fluid communication with each other and at least one of the delivery tubes 810 is located on the rotation body 820 to adjust the spray direction of the firefighting foam. The delivery tubes 810 may be hard pipes or hoses.

Referring to Fig. 1, in some embodiments, the firefighting foam foaming system further comprises an injector 830. In particular, the injector 830 can be, for example, a fire cannon. The injector 830 is located at the downstream end of the delivery tube 810. Foam is finally delivered from the delivery tube 810 to the injector 830, and then is sprayed for fire suppression. The distance between the injector 830 and the firefighting foam generator 700 is greater than 5 to 10 times the maximum diameter of the pipeline between the firefighting foam generator 700 and the injector 830. The superficial velocity V_{F2} of foam in the delivery tube between the firefighting foam generator 700 and the injector 830 is 6 m/s to 12 m/s, so that the injector 830 sprays high-quality and uniform fire extinguishing foam.

Referring to Fig. 1, in some embodiments, the length of the pipeline between the firefighting foam foaming device 100 and the firefighting foam generator 700 is greater than or equal to 10 to 20 times the maximum diameter of the pipeline, which is advantageous for the stable foam generation.

In order to reduce the pressure loss of the pipeline, improve the foaming quality and form a uniform bubble flow, the firefighting foam foaming system adopts parameters as below: the first superficial velocity V_{M1} of the foam mixture delivery tube is 6 to 8 m/s. The second superficial velocity V_{G} of compressed air supply tube is 8 -15 m/s, and the third superficial velocity V_{F1} of foam in the delivery tube 810 between the firefighting foam foaming device 100 and the firefighting foam generator 700 is 5 -10 m/s. The inlet superficial velocity of the firefighting foam generator 700 is the same as its outlet superficial velocity, they are both V_{F1} in the range of 5 to 10 m/s. The fourth superficial velocity V_{F2} of foam delivered in the delivery tube between the firefighting foam generator 700 and the injector 830 is 6 to 12 m/s.

The aforethe technical solution, which is applicable to the large-flow compressed air foam system, features high foaming quality, small pressure loss in the pipeline, compact and delicate structure of foaming device, small space occupation, and is convenient for use and maintenance.

Referring to Fig. 13, embodiments of this disclosure provide a firefighting foam foaming method, implemented by using the firefighting foam foaming system provided by any one of the technical solutions of this disclosure. Anything not described in this embodiment can be found in the embodiments above. The firefighting foam foaming method comprises the steps of:

Step S100, delivering a foam mixture at a set first velocity V_{M1} to the first inlet tube 140 of the firefighting foam foaming device 100 when spraying a foam extinguishing agent. In some embodiments, V_{M1} is 6 to 8 m/s.

Step S200, delivering a compressed air at a set second velocity V_{G} to the second flow path 112 of the two-phase flow injection seat 110 of the firefighting foam foaming device 100. In some embodiments, the second velocity V_{G} is 8 to 15m/s. By carrying out step S100 first and then step S200, the jet flow in the initial stage of spraying becomes more stable.

In some embodiments, the firefighting foam foaming method further comprises the step S300 of: delivering a fluid output by the firefighting foam foaming device 100 at a set third velocity V_{F1} to the firefighting foam generator 700. The superficial velocity of foam in the delivery tube 810 between the two-stage foaming devices is the third velocity V_{F1}. In some embodiments, V_{F1} is 5 m/s to 10 m/s.

In some embodiments, the firefighting foam foaming method further comprises the step S400 of: delivering a fluid output by the firefighting foam foaming foamer 700 at a set fourth velocity V_{F2} to the injector 830. In some embodiments, V_{F2} is 6 to 12 m/s.

By adopting suitable foaming parameters, the above technical solution can reduce the pressure loss of the pipeline effectively, improve the foam quality and form a uniform bubble flow, and thus is especially suitable for a large-flow compressed air foam system.

In description of the present disclosure, it needs to be appreciated that orientation or position relations denoted by the terms "center", "longitudinal", "transverse", "front", "rear", "left", "right", "vertical", "horizontal", "top', "bottom", "inner", "outer" and the like are orientation or position relations illustrated based on the drawings, are merely for the convenience of describing the present disclosure and simplifying description, instead of indicating or implying the denoted devices or elements must have specific orientations or be constructed and operated in specific orientations, and thus the terms cannot be construed as limiting the protection scope of the present disclosure.

Finally, it should be noted that the above embodiments are only used for describing rather than limiting the technical solutions of the present disclosure. Although the present disclosure is described in detail with reference to the preferred embodiments, those of ordinary skill in the art should understand that they still can make modifications to the specific implementations in the present disclosure or make equivalent substitutions to part of technical features thereof; and such modifications and equivalent substitutions should be encompassed within the scope of the technical solutions sought for protection in the present disclosure so long as they do not depart from the spirit of the technical solutions of the present disclosure.

## Claims

1. A firefighting foam foaming device, comprising:
a two-phase flow injection seat (110), comprising a first flow path (111) and a second flow path (112) that are independent of each other;
a jet nozzle assembly (120) comprising a liquid inlet hole (121), an air inlet hole (122), a first air outlet hole (123) and a flow guiding section (124); the liquid inlet hole (121) being in fluid communication with the first flow path (111) and the liquid inlet hole (121) being located downstream of the first flow path (111); the air inlet hole (122) being in fluid communication with the second flow path (112) and being located downstream of the second flow path (112); and
a foam mixing chamber (130), located downstream of the first flow path (111) and the second flow path (112), and fluidly communicated with both the first flow path (111) and the second flow path (112); the first air outlet hole (123) and the flow guiding section (124) both extending into the foam mixing chamber (130); the first air outlet hole (123) and the flow guiding section ( 124) being so configured to cause the air flow from the jet nozzle assembly (120) to flow to various positions in a radial direction of the foam mixing chamber (130).

2. The firefighting foam foaming device according to claim 1, wherein the flow guiding section (124) comprises:
a second air outlet hole (124'), located at a different position in the radial direction of the foam mixing chamber (130) from the first air outlet hole (123).

3. The firefighting foam foaming device according to claim 2, wherein the jet nozzle assembly (120) comprises:
a mounting plate (125), abutting against and secured to the two-phase flow injection seat (110); the mounting plate (125) being provided with the liquid inlet hole (121) in fluid communication with the first flow path (111) of the two-phase flow injection seat (110) and the air inlet hole (122) in fluid communication with the second flow path (112);
an axial tube (126), located on a side of the mounting plate (125) away from the two-phase flow injection seat (110); an axis of the axial tube (126) being parallel to a central axis of the two-phase flow injection seat (110); and the axial tube (126) being in fluid communication with the air inlet hole (122) of the mounting plate (125); and
a radial tube (127), with its central axis intersecting a central axis of the axial tube (126), one end of the radial tube (127) being in fluid communication with the axial tube (126), and an other end of the radial tube (127) being adjacent to the side of the axial tube (126) facing the central axis of the two-phase flow injection seat (110).

4. The firefighting foam foaming device according to claim 3, wherein there is a plurality of the axial tubes (126) that are arranged at intervals along a circumferential direction of the mounting plate (125).

5. The firefighting foam foaming device according to claim 3, wherein an other end of the axial tube (126) is away from the two-phase flow injection seat (110); the other end of the axial tube (126) is used as the first air outlet hole (123) and is open; the other end of the axial tube (126) faces the inner wall of the foam mixing chamber (130).

6. The firefighting foam foaming device according to claim 3, wherein the other end of the radial tube (127) is away from the axial tube (126) and is closed; a side wall of the radial tube (127) near an other end of the axial tube (126) is provided with the second air outlet hole (124');
an axial direction of the second air outlet hole (124') is parallel to the central axis of the two-phase flow injection seat (110) or, the axial direction of the second air outlet hole (124') is intersected by the central axis of the two-phase flow injection seat (110) with an angle of less than 90°.

7. The firefighting foam foaming device according to claim 1, wherein the flow guiding section (124) comprises:
a flow guiding plate (124''), located near the first air outlet hole (123); the flow guiding plate (124'') being configured to deflect a portion of air flow from the first air outlet hole (123) to a position near a central axis of the foam mixing chamber (130).

8. The firefighting foam foaming device according to claim 7, wherein the jet nozzle assembly (120) further comprises:
a mounting plate (125), abutting against and secured to the two-phase flow injection seat (110); the mounting plate (125) being provided with the air inlet hole (122) in fluid communication with the second flow path (112) of the two-phase flow injection seat (110); and
an axial tube (126), located on a side of the mounting plate (125) away from the two-phase flow injection seat (110); an axis of the axial tube (126) being parallel to a central axis of the two-phase flow injection seat (110); and the axial tube (126) being in fluid communication with the air inlet hole (122) of the mounting plate (125);
wherein the flow guiding plate (124'') is fixedly connected to the axial tube (126) and is configured to be non-porous; the flow guiding plate (124") is configured to form a negative pressure region at a side of itself away from the mounting plate (125), so that a portion of the air flow output by the axial tube (126) flows to the negative pressure region.

9. The firefighting foam foaming device according to any one of claims 1-8, wherein the first flow path (111) is located on a central axis of the two-phase flow injection seat (110); and in a radial direction of the two-phase flow injection seat (110), the second flow path (112) is located on an outer side of the first flow path (111).

10. The firefighting foam foaming device according to any one of claims 1-8, further comprising:
a first inlet tube (140), the first flow path (111) disposed downstream of the first inlet tube (140) and in fluid communication with the first inlet tube (140); and
a first outlet tube (150), located downstream of the foam mixing chamber (130).

11. The firefighting foam foaming device according to claim 10, wherein the first inlet tube (140) has a same flow area as the first outlet tube (150).

12. The firefighting foam foaming device according to any one of claims 1-11, wherein an inlet diameter of the foam mixing chamber (130) is 1.3 to 1.7 times an outlet diameter of the foam mixing chamber (130).

13. The firefighting foam foaming device according to any one of claims 1-12, wherein an axial length of the foam mixing chamber (130) is 0.4 to 0.6 times an outlet diameter of the foam mixing chamber (130).

14. The firefighting foam foaming device according to any one of claims 1-13, wherein an inner wall of the foam mixing chamber (130) is configured to be conical; an inlet of the foam mixing chamber (130) has a larger flow area than an outlet of the foam mixing chamber (130).

15. The firefighting foam foaming device according to claim 14, wherein the inner wall of the foam mixing chamber (130) and a central axis of the foam mixing chamber (130) has an angle θ of between 40° and 50°.

16. A firefighting foam foaming system, comprising:
the firefighting foam foaming device (100) according to any one of claims 1-15;
an air supply flow path (200), located upstream of a second flow path (112) of the two-phase flow injection seat (110) to supply air to the two-phase flow injection seat (110);
a foam stock supply flow path (300), located upstream of the first flow path (111) to supply foam stock to the two-phase flow injection seat (110); and
a water supply flow path (400), also located upstream of the first flow path (111) to supply water to the two-phase flow injection seat (110).

17. The firefighting foam foaming system according to claim 16, further comprising:
a water spray branch (500), arranged in parallel with the firefighting foam foaming device (100); one end of the water spray branch (500) being in fluid communication with the water supply flow path (400); an other end of the water spray branch (500) being connected in parallel with the first outlet tube (150); and
a foam spray branch (600), communicated to the water supply flow path (400); the foam spray branch (600) being located between the water supply flow path (400) and the first flow path (111) and being in fluid communication with both the water supply flow path (400) and the first flow path (111);
wherein the water supply flow path (400) is optionally in fluid communication with at least one of the water spray branch (500) and the foam spray branch (600).

18. The firefighting foam foaming system according to claim 17, further comprising:
a first switching valve (501), arranged on the water spray branch (500); and/or a second switching valve (601), arranged on the foam spray branch (600).

19. The firefighting foam foaming system according to claim 17, further comprising:
the firefighting foam generator (700), located downstream of the firefighting foam foaming device (100) and the water spray branch (500).

20. The firefighting foam foaming system according to claim 19, further comprising:
a delivery tube (810), fluidly communicated to the firefighting foam generator (700), the delivery tube (810) being located downstream of the firefighting foam generator (700).

21. The firefighting foam foaming system according to claim 20, further comprising:
a rotation body (820), connecting the delivery tube (810).

22. The firefighting foam foaming system according to claim 20 or 21, wherein there is a plurality of the delivery tubes (810), two adjacent the delivery tubes (810) are in fluid communication with each other and at least one of the delivery tubes (810) is located on the rotation body (820).

23. The firefighting foam foaming system according to claim 20 or 21, further comprising:
an injector (830), located downstream of the delivery tube (810); a length of a pipeline between the injector (830) and the firefighting foam generator (700) being greater than 5 to 10 times a maximum diameter of the pipeline between the firefighting foam generator (700) and the injector (830).

24. The firefighting foam foaming system according to any one of claims 19-23, wherein a length of a pipeline between the firefighting foam foaming device (100) and the firefighting foam generator (700) is greater than or equal to 10 to 20 times a maximum diameter of the pipeline.

25. The firefighting foam foaming system according to any one of claims 16-24, further comprising:
a foam mixture switching valve (840), located upstream of the first flow path (111) and downstream of the foam spray branch (600) and the foam stock supply flow path (300).

26. The firefighting foam foaming system according to any one of claims 16-25, wherein the air supply flow path (200) comprises:
an air compressor (201), configured to supply compressed air;
an air distribution valve (202), located downstream of the air compressor (201) and upstream of the second flow path (112) of the firefighting foam foaming device (100); and
a cooler (203), located downstream of the air distribution valve (202) and upstream of the second flow path (112) of the firefighting foam foaming device (100).

27. The firefighting foam foaming system according to claim 26, wherein the air supply flow path (200) further comprises:
a first air filter (204), located upstream of the air compressor (201); and
a second air filter (205), located downstream of the air compressor (201).

28. The firefighting foam foaming system according to any one of claims 16-27, wherein the foam stock supply flow path (300) comprises:
a foam suction valve (301), configured to communicate with a foam stock port;
a flushing water inlet valve (302), configured to communicate with a flushing water port; the flushing water inlet valve (302) being arranged in parallel with the foam suction valve (301); and
a foam pump (303), located downstream of the foam suction valve (301) and the flushing water inlet valve (302).

29. The firefighting foam foaming system according to any one of claims 16-28, wherein the water supply flow path (400) comprises:
a filter (401);
a water pump (402), located downstream of the filter (401);
a vacuum pump (403), communicated with a pipeline between the filter (401) and the water pump (402) to extract air within the pipeline; and
a check valve (404), located downstream of the water pump (402).

30. A firefighting foam foaming method, implemented by the firefighting foam foaming system according to any one of claims 16-30, comprising the steps of:
delivering a foam mixture at a set first velocity V_{M1} to a first inlet tube (140) of the firefighting foam foaming device (100) when spraying a foam extinguishing agent; and
delivering a compressed air at a set second velocity V_{G} to a second flow path (112) of a two-phase flow injection seat (110) of the firefighting foam foaming device (100).

31. The firefighting foam foaming method according to claim 30, wherein the V_{M1} is between 6 and 8 m/s and/or the V_{G} is between 8 and 15 m/s.

32. The firefighting foam foaming method according to claim 30 or 31, further comprising the step of:
delivering a fluid output by the firefighting foam foaming device (100) at a set third velocity V_{F1} to the firefighting foam generator (700).

33. The firefighting foam foaming method according to claim 32, wherein the V_{F1} is between 5 and 10 m/s.

34. The firefighting foam foaming method according to claim 32 or 33, further comprising the step of:
delivering a fluid output by the firefighting foam foaming device (700) at a set fourth velocity V_{F2} to the injector (830).

35. The firefighting foam foaming method according to claim 34, wherein the V_{F2} is between 6 and 12 m/s.

36. The firefighting foam foaming method according to claim 34 or 35, wherein a superficial velocity V_{1I} of the foam mixture injected at an inlet of the foam mixing chamber (130) of the firefighting foam foaming device (100) is between 2 m/s and 5 m/s; and/or
a superficial velocity V_{1G} of the compressed air injected at the inlet of the foam mixing chamber (130) of the firefighting foam foaming device (100) is between 10 m/s and 20 m/s; and/or
a superficial velocity V_{1O} of the foam outflow at the outlet of the foam mixing chamber (130) of the firefighting foam foaming device (100) is between 4 m/s and 8 m/s.
